Europäisches Patentamt

European Patent Office

Office européen des brevets

(11) Publication number: **0 396 348**
**A1**

## (12) EUROPEAN PATENT APPLICATION

(21) Application number: **90304610.0**

(22) Date of filing: **27.04.90**

(51) Int. Cl.5: **C08K 3/04, C08L 21/00,**
**C09C 1/50**

(30) Priority: **28.04.89 JP 107795/89**

(43) Date of publication of application:
**07.11.90 Bulletin 90/45**

(84) Designated Contracting States:
**DE ES FR GB IT LU**

(71) Applicant: **Bridgestone Corporation**
**10-1, Kyobashi 1-Chome Chuo-Ku**
**Tokyo 104(JP)**

(72) Inventor: **Mukai, Uchu**
**5-5, Ogawahigashi-Cho, 3-chome**
**Kodaira City, Tokyo(JP)**
Inventor: **Kawamura, Masanori**
**1293-10, Tateno 3-chome**
**Nigashiyamato City, Tokyo(JP)**
Inventor: **Sato, Kazuhide**
**5-5 Ogawahigashi-Cho 3-chome**
**Kodaira City, Tokyo(JP)**

(74) Representative: **Whalley, Kevin et al**
**MARKS & CLERK 57/60 Lincoln's Inn Fields**
**London WC2A 3LS(GB)**

(54) **Rubber composition.**

(57) A rubber composition oomprises natural rubber and/or a diene based synthetic rubber, and carbon black. The carbon black has a characteristic that a line-width $\Delta H$ (mT) in an electron spin resonance (ESR) satisfies $\Delta H$ (mT) $\geq e^{0.11T-7.56} + 5$ in which T is a coloured transmittance (toluene discolouration) falling in a range of 100-60%.

## FIG. 1

# RUBBER COMPOSITION

The present invention relates to a rubber composition which is to be used for tires, hoses, conveyor belts and the like and which has an improved reinforcing property, particularly improved heat generation and processability.

Carbon blacks such as ISAF or the like, possessing highly reinforcing ability has formerly been used for rubber compositions in treads of tires for trucks and buses, and the like in which considerably high wear resistance is required. In recent years, as demands for economy has become greater in the market, it comes to be an important point to attain higher wear resistance from the standpoint of determination of values of products.

In order to improve wear resistance, the compounding recipe is varied, for instance, the compounding ratio of carbon black is increased or the amount of a softener such as a process oil is decreased, or alternatively SAF grade carbon black having a more excellent reinforcing ability is used instead of ISAF grade carbon black.

However, if the compounding ratio of carbon black is increased, the wear resistance is indeed improved within a certain range of the compounding ratio. But, as the compounding ratio increases, demerits become greater. For example, with increase in the compounding ratio, the effect obtained gradually decreases, and the wear resistance of the rubber composition lowers.

On the other hand, if the ratio of the softening agent such as process oil is decreased, tacking of the kneaded rubber composition becomes poorer, although the wear resistance is improved. In addition, the viscosity of the rubber increases. Thereby, operability is deteriorated to a large extent.

Further, when the SAF grade carbon black is used, the problem that operability becomes poorer due to increased viscosity exists, although wear resistance is improved.

Under the circumstances, although various investigations have been made with respect to extension of the rubber-kneading time period and the producing techniques, sufficient effects could not been obtained up to now.

Therefore, it is an object of the present invention to provide a rubber composition which has low heat generation, high reinforcing ability, and particularly high wear resistance without deteriorating operability due to increased viscosity.

The present inventors have repeatedly made strenuous studies and investigations to solve the above-mentioned problem, and they has reached the conclusion that ISAF grade carbon black and SAF grade carbon black which satisfy specified characteristic requirements are effective for solving the above problems. The inventors have accomplished the invention based on this conclusion.

That is, the present invention relates to the rubber composition comprising natural rubber and/or a diene based synthetic rubber and carbon black, wherein the carbon black has a characteristic that a line-width $\Delta H$ (mT) in an electron spin resonance spectrum (ESR) satisfies $\Delta H$ (mT) $\geq e^{0.11T-7.56} + 5$ in which mT and T are militesla and a toluene discoloration (%) falling in a range of 100-60%, respectively. The line-width in the ESR is defined as $\Delta H$ which is a distance between peaks in the ESR spectrum.

As examples of the diene based synthetic rubber which is one of the rubber components in the present invention, a synthesized polyisoprene rubber, a polybutadiene rubber, a styrene butadiene rubber, etc. are recited. Each of these rubbers may be used singly or in combination with other.

These and other objects, features and advantages of the invention will be appreciated upon reading of the invention when taken in conjunction with the attached drawing, with the understanding that some modifications, variations and changes of the same could be made by the skilled person in the art to which the invention pertains without departing from the spirit of the invention or the scope of claims appended hereto.

For a better understanding of the invention, reference is made to the attached drawing, wherein:

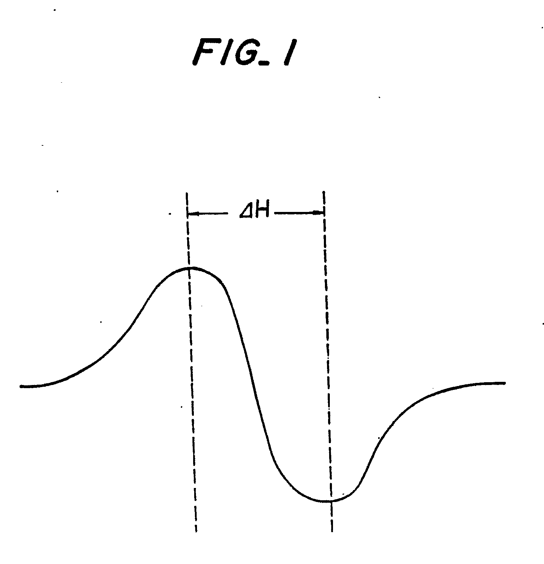

Fig. 1 is a diagram showing the ESR spectrum.

In the following, carbon black as the main ingredient of the present invention will be explained.

First, carbon black is required to have the characteristic that the line-width $\Delta H$ (mT) in the ESR satisfies $\Delta H$ (mT) $\geq e^{0.11T-7.56} + 5$. This is for the following reasons:

It is said that as the firing temperature and time increase, the line-width of the fired product in the ESR measurement is greater. In such a case, the toluene discoloration T approaches 100%. In general, carbon black having a low toluene discoloration has excellent affinity with a polymer, and attains both high reinforcing ability and low heat generation as the physical properties of the rubber composition. However, since the graphitization degree of such a carbon black is low, this carbon black itself has a defect in the reinforcement. That is, when T is smaller than 60%, grains themselves of the carbon black become brittle to in turn adversely affect the rubber-reinforcing ability. The carbon black according to the present invention is just a carbon black capable of overcoming the above-mentioned contradictory properties. This carbon black has excellent affinity with the polymer at its surface, and also has the structure in which graphitization proceeds. The requirement to be satisfied by the carbon black is the relationship given above. T is preferably not more than 95%, which has empirically determined.

Next, it is preferable that the carbon black according to the present invention has a CTAB value (cetyltrimethyl ammonium bromide-absorbed amount) is not less than 105 $m^2/g$. This is because if the CTAB value is less than 105 $m^2/g$, the carbon black may has poorer reinforcing ability as compared with currently used carbon blacks.

The carbon black according to the present invention preferably has a $_{24}M_4$ DBP oil-adsorbed amount (an amount of adsorbed dibutylphthalate onto carbon black after it is compressed at four times at 24,000 psi) of not less than 85 m$\ell$/100 g. This is because if the value is less than 85 m$\ell$/100 g, the rubber composition added with the carbon black has poorer wear resistance particularly at a high severity zone.

Further, in the carbon black according to the present invention, an $N_2SA$ value (a nitrogen-adsorbing specific surface area) $(m^2/g)$ preferably differs from the CTAB value by not more than 10 $m^2/g$. The reason is that if the difference is greater than 10 $m^2/g$, the number of fine pores in the surface of the carbon black increases so that the viscosity of the compounded rubber increases, the reinforcing ability is deteriorated due to poor dispersion, and in turn the wear resistance becomes insufficient.

As a matter of course, compounding agents ordinarily used in the rubber industry, such as a reinforcing filler, a vulcanizing agent, a vulcanization accelerator, a vulcanization accelerator aid, and an antioxidant may appropriately be added.

In the following, the present invention will be explained in more detail with reference to Examples and Comparative Examples.

First, methods for measuring the characteristic values of carbon black and those for measuring physical properties of the rubber will be explained.

(A) Methods for measuring the characteristic values of carbon black:

The toluene discoloration was measured according to JIS K 6221-1982.

The toluene discoloration-measuring process according to JIS K 6221-1982, which corresponds to that in ASTM D 1618-83, is basically as follows:

2.00 ± 0.01 g of a dried sample pulverized in a mortar is precisely taken in a 100 m$\ell$ Erlenmayer flask (JIS 3503), 20 m$\ell$ toluene is added, and a ground stopper is fitted to the flask. Immediately thereafter, the content is vigorously shaked by hand or a machine for 60-110 seconds. (In the present invention, the shaking is effected for 60 seconds). Immediately after the shaking, as much as the content is placed onto a filter paper-fitted glass funnel preliminarily set in another Erlenmayer flask. Immediately after the filtration, the funnel is removed, and a stopper is fitted to the flask.

After an absorbing cell is washed with a part of the filtrate three times, the cell is filled with the filtrate, and transmittance of the filtrate is measured at a wavelength of 420 ± 5 nm by a photoelectric photometer or a spectrometer. Measurement results are shown by %. In every measurement, toluene having been preliminarily filtered is used, and adjustment is performed to make its transmittance equal to 100 at 420 ± 5 nm.

The CTAB value was measured according to ASTM D 3765-85.

The $_{24}M_4$DBP oil-adsorbed amount was measured according to ASTM D 3493-84.

The $N_2SA$ value was measured according to ASTM D 3037-84B.

An electron spin resonance apparatus JES-RE 2X (JEOL, Ltd.) was used as the ESR, and measurements were effected under the following conditions.

Measurement temperature 25° C
Power 1 mW
Center field 331 mT
Sweep width 150 mT (331±75 mT)
Sweep time 12 min
Field modulation 100 KHz
Field modulation width 2 mT
Time constant 1 sec

As mentioned before, the line-width in the ESR was defined as ΔH which was taken as a difference between peaks in the ESR spectrum (see Fig. 1).

(B) Method for measuring rubber properties:

The Mooney viscosity was measured according to JIS 6300-1974. The wear resistance index representing wear resistance was obtained by measuring the worn loss amount with use of a Lambourn tester and effecting calculation according to the following expression.

$$\textbf{Wear resistance index} = \frac{\textbf{Volume loss amount of control}}{\textbf{Volume loss amount of test piece}} \times \textbf{100}$$

Note:

Comparative Example 1 was taken as control in Examples 1 and 2.
Comparative Example 2 was taken as control for Example 3.
Comparative Example 3 was taken as control for Examples 4 and 5.
Comparative Example 4 was taken as control for Examples 6 and 7.
Comparative Example 5 was taken as control for Example 8.

The tan $\delta$ value representing the heat generating characteristic was measured with use of a viscoelastic spectrometer manufactured by Iwamoto Seisakusho Corporation under conditions that a tensile dynamic strain, a frequency, and a temperature were 1%, 50 Hz, and 25° C, respectively. Slab sheets having the thickness of about 2 mm and the width of 5 mm were used as test pieces, and a span between holding points of the test pieces and an initial load were 2 cm and 100 g, respectively. The lower the tan $\delta$, the lower is heat generation.

Rubber compositions having respective compounding systems shown in below Table 1 were separately kneaded by a Banbury mixer using carbon blacks having different properties, and their Mooney viscosities were measured. Further, the wear resistance indexes and the tan $\delta$ value of vulcanizates obtained at 145° C for 30 minutes were evaluated by measurement. Results are shown in Table 2.

Table 1

| Compounding recipe of test pieces | |
|---|---|
| Ingredients | Ratio / Parts by weight |
| Polymer | 100 |
| Carbon black | 50 |
| Stearic acid | 3.0 |
| Zinc oxide | 4.0 |
| Antioxidant *1 | 1.0 |
| Vulcanization accelerator *2 | 0.5 |
| Sulfur | 2.5 |

*1 N-phenyl-N´-isopropyl-p-phenyldiamine
*2 N-oxydiethylene-2-benzothiazol sulfenamide

4

Table 2(a)

| | | Comparative Example 1 | Example 1 | Example 2 | Comparative Example 2 | Example 3 |
|---|---|---|---|---|---|---|
| Characteristics of carbon black | Kind | A | B | C | D | E |
| | Line-width in ESR (mT) | 29.0 | 37.5 | 22.3 | 22.0 | 24.5 |
| | Toluene discoloration T(%) | 98 | 100 | 87.1 | 97 | 80 |
| | $e^{0.11T-7.56}+5$ | 30.0 | 36.2 | 12.5 | 27.4 | 8.5 |
| | CTAB ($m^2$/g) | 115 | 114 | 115 | 122 | 120 |
| | $_{24}M_4$DBP (m$\ell$/100g) | 98 | 97 | 96 | 98 | 98 |
| | $N_2$SA-CTAB ($m^2$/g) | 11 | 0 | 1 | 8 | 6 |
| Characteristics of rubber | Natural rubber | 100 | 100 | 100 | 100 | 100 |
| | SBR 1500 *1 | - | - | - | - | - |
| | Mooney viscosity | 67 | 60 | 60 | 69 | 64 |
| | Wear resistance index *2 | 100 | 106 | 112 | 100 | 112 |
| | Tan $\delta$ (indicated by index) *3 | 100 | 93 | 91 | 100 | 89 |

Table 2(b)

| | | Comparative Example 3 | Example 4 | Example 5 |
|---|---|---|---|---|
| Characteristics of carbon black | Kind | F | G | H |
| | Line-width in ESR (mT) | 31.1 | 37.5 | 24.1 |
| | Toluene discoloration T(%) | 99 | 96.6 | 83.1 |
| | $e^{0.11T-7.56}+5$ | 32.9 | 26.5 | 9.9 |
| | CTAB ($m^2$/g) | 135 | 133 | 137 |
| | $_{24}M_4$DBP (m$\ell$/100g) | 96 | 91 | 96 |
| | $N_2$SA-CTAB ($m^2$/g) | 13 | 9 | 8 |
| Characteristics of rubber | Natural rubber | 100 | 100 | 100 |
| | SBR 1500 *1 | - | - | - |
| | Mooney viscosity | 83 | 78 | 77 |
| | Wear resistance index *2 | 100 | 107 | 117 |
| | Tan $\delta$ (indicated by index) *3 | 100 | 93 | 91 |

Table 2(c)

| | | Comparative Example 4 | Example 6 | Example 7 | Comparative Example 5 | Example 8 |
|---|---|---|---|---|---|---|
| Characteristics of carbon black | Kind | I | J | K | I | J |
| | Line-width in ESR (mT) | 32.0 | 20.8 | 20.0 | 32.0 | 20.8 |
| | Toluene discoloration T(%) | 99 | 83.1 | 87.1 | 99 | 83.1 |
| | $e^{0.11T-7.56} + 5$ | 32.9 | 9.9 | 12.5 | 32.9 | 9.9 |
| | CTAB (m²/g) | 157 | 156 | 158 | 157 | 156 |
| | $_{24}M_4$DBP (mℓ/100g) | 102 | 104 | 97 | 102 | 104 |
| | $N_2$SA-CTAB (m²/g) | 16 | 1 | 6 | 16 | 1 |
| Characteristics of rubber | Natural rubber | 100 | 100 | 100 | 50 | 50 |
| | SBR 1500 *1 | - | - | - | 50 | 50 |
| | Mooney viscosity | 104 | 82 | 95 | 95 | 89 |
| | Wear resistance index *2 | 100 | 119 | 116 | 100 | 111 |
| | Tan $\delta$ (indicated by index) *3 | 100 | 92 | 96 | 100 | 95 |

*1 : Styrene butadiene copolymeric rubber made by Japan Synthetic Rubber Co., Ltd.
*2 : The larger the value, the better the characteristic.
*3 : The smaller the value, the better the characteristic.

From the results in Table 2, it is seen that the rubber compositions using the carbon black satisfying the characteristic requirement according to the present invention (Examples 1-6) have smaller Mooney viscosity of their unvulcanized compositions and more excellent wear resistance and heat generation properties of their vulcanizates as compared with those not satisfying this requirement.

As having been explained above, in the rubber composition of the present invention in which the carbon black satisfying the specific requirement is compounded into the diene based rubber, the Mooney viscosity of the unvulcanized product as one of important factors in processability can be suppressed to a low level with the greatly improved wear resistance and the heat generation property by using the carbon black as the reinforcing agent. Therefore, when the rubber composition according to the present invention can be applied to treads for various tires, and to rubber articles such as conveyor belts or hoses, particularly the wear resistance and heat generation property are improved. Thus, the invention can contribute to the improved performances of the articles. In addition, since the Mooney viscosity of the unvulcanized rubber composition is small and the processability is excellent as mentioned above, the merits are great in the production of the articles.

## Claims

1. A rubber composition comprising at least one of natural rubber and a diene based synthetic rubber, and carbon black, wherein the carbon black has a characteristic that a line-width $\Delta H$ (mT) in an electron spin resonance (ESR) satisfies $\Delta H$ (mT) $\geq e^{0.11T-7.56} + 5$ in which T is toluene discolouration (%) falling in a range of 100-60%.

2. A rubber composition as claimed in claim 1, characterized in that a CTAB value and a $_{24}M_4$DBP oil-adsorbed amount of the carbon black is not less than 105 m²/g and not less than 85 mℓ/100 g, respectively.

3. A rubber composition as claimed in claim 1 or 2, characterized in that a balance of {an $N_2$SA value (m²/g) - a CTAB value (m²/g)} is not more than 10 m²/g.

4. A rubber composition as claimed in any of claims 1 to 3, characterized in that the toluene discolouration T is not more than 95%.

# FIG. 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | RUBB. CHEM. TECHN., vol. 54, 1981, pages 427-438; C.R. WILDER et al.: "Effects of carbon black types on treadwear of radial and bias tires at variable test severities" * page 428, table I * | 1-4 | C 08 K 3/04<br>C 08 L 21/00<br>C 09 C 1/50 |
| X | DE-A-3 426 864 (TOYO TIRE & RUBBER CO., LTD) * Claim 1; table 1-1; example 7 * | 1-4 | |
| X | FR-A-2 349 628 (PHILLIPS PETROLEUM) * Claim 2; table II * | 1-4 | |

TECHNICAL FIELDS
SEARCHED (Int. Cl.5)

C 08 K
C 09 C

The present search report has been drawn up for all claims

| Place of search | Date of completion of the search | Examiner |
|---|---|---|
| THE HAGUE | 01-08-1990 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)